# EUROPEAN PATENT APPLICATION

(11) **EP 2 036 648 A1**
(43) Date of publication of application: **18.03.2009**
(21) Application number: 07116445.3
(22) Date of filing: 14.09.2007
(51) Int. Cl.: B23K 11/11, B23K 37/04, B23P 19/00, B23Q 17/24, G01C 15/00, B23K 11/28

(54) **A device for assisting in manual welding using a plurality of mark light projecting units**

(71) Applicant: Plakoni Engineering, 3600 Genk (BE)
(72) Inventor: Kenis, Geert, B-3990 Peer (BE)
(74) Representative: Sarlet, Steven Renaat Irène

(57) **Abstract**

The present application relates to a device (1) for assisting in manual welding, comprising
- a support (3),
- indicating means (4) for indicating one or more welding locations onto a workpiece (8) and
- a mounting arrangement (2) for mounting the workpiece (8) in a predetermined position with respect to the indicating means (4),
wherein the indicating means (4) are formed by a plurality of mark projecting units (5), individually adjustably mounted on the support (3), each comprising a light source (6) for projecting a mark onto the workpiece (8) indicating where a weld is to be applied.

## Description

The present invention relates to a device for assisting in manual welding, comprising a support, indicating means for indicating one or more welding locations onto a workpiece and a mounting arrangement for mounting the workpiece in a predetermined position with respect to the indicating means.

Welding is a well-known technique for example for joining several pieces of a workpiece together. When manually welding a workpiece, a welding unit is manually directed towards a given location on the workpiece. The location of the weld on the finished workpiece is in many cases determinant for the strength and the mechanical properties of the finished workpiece and is chosen in function thereof. The location of the different welds on different parts of a car for example determines the strength of the assembled car or even determines the crumple zone of the finished car. Not applying the weld at the correct location can in other words have an effect on the strength or mechanical functioning of the workpiece, for example the crumpling of a finished car. Some welding locations are however difficult to distinguish on the workpiece. It is therefore difficult to accurately apply the weld at those predetermined locations when manually welding the workpiece.

JP-A-63183783 discloses a welding unit comprising a lower and an upper electrode for welding a workpiece, between which the workpiece is mounted. When the lower and the upper electrode contact the workpiece at a contact location, the workpiece is being welded at the contact location. The welding unit also comprises a laser indicating the position of the lower electrode, which is covered by the workpiece, projecting a mark onto the upper surface so that the position of the weld can be predicted by the person operating the welding unit. The welding unit of JP-A-63183783 however has the disadvantage that it is restricted to spot welding and that only a single location is being indicated.

It is the aim of the invention to provide a more widely applicable device for assisting in manual welding, which has a simple construction and is easily operable.

This is achieved according to the present invention with a device showing the technical features of the first claim.

Thereto, the indicating means are formed by a plurality of mark projecting units, individually adjustably mounted on the support, each comprising a light source for projecting a mark onto the workpiece indicating where a weld is to be applied.

The device has a simple construction since the device according to the current invention can be constructed using only a few parts. The device according to the current invention therefore also is simple in operation since the skilled person orients the units, e.g. manually, individually once and then the marks can be easily projected onto several successive workpieces by simply switching on the light sources. The fact that the subsequent workpiece to be welded ends up in the same, predetermined location with respect to the mark projecting units can ensure that the welds are applied on the correct locations.

By marking the correct welding locations on the workpiece, the welder can accurately apply welds at the correct welding locations substantially increasing the quality of the welded workpiece. Marking the correct welding locations on the workpiece by projection has the advantage that the marks do not need to be physically applied to the workpiece, such as for example by writing, gluing, etc. The different welding locations can be marked in a single step after placing the workpiece onto the mounting arrangement without having to physically mark the workpiece. The marks moreover do not need to be removed before welding in order to be able to reach the correct welding location or do not need to be removed after welding. Moreover, the risk that application of one of the marks is forgotten or has been unwontedly removed is reduced since all of the correct welding locations are always indicated after configuration of the different mark projecting units.

By providing a number of mark projecting units, different welding locations can be simultaneously indicated so that the different welding locations can be simultaneously welded, making the process of welding the workpiece faster and more efficient.

Since the mark projecting units are individually adjustable on the support, the mark projecting units can be easily adapted to indicate different welding locations, for example on different workpieces, without having to substantially adapt the device.

Since the different parts of the device are readily available, the device according to the invention moreover is easy to make, cheap, etc.

In a further preferred embodiment at least one light source comprises a laser. Since a laser can accurately project a small and clearly distinct mark onto an object, in this case the workpiece, the welding location is accurately marked so that the weld can be more accurately provided onto the workpiece. In addition a laser is able to project a mark with high intensity so that the predetermined location to be welded is clearly indicated, even in a well lit environment, such as a workplace.

In a further preferred embodiment, the device according to the invention comprises a first set of mark projecting units provided for projecting at least one first mark onto a first workpiece and at least a second set of mark projecting units provided for projecting at least one second mark onto a second workpiece and switching means for selecting the first or the second set.

The first and at least second set of mark projecting units allow the device to be configured for at least two different workpieces so that the different workpieces can be processed by a single device according to the invention without having to reconfigure the different mark projecting units.
Figure 1 shows an overview of a device according to the invention.
Figure 2 shows a detail of part of the device of figure 1.
Figure 3 shows a different view of the detail of figure 2.
Figure 4 shows a further detail of part of the detail of figure 2 and 3.

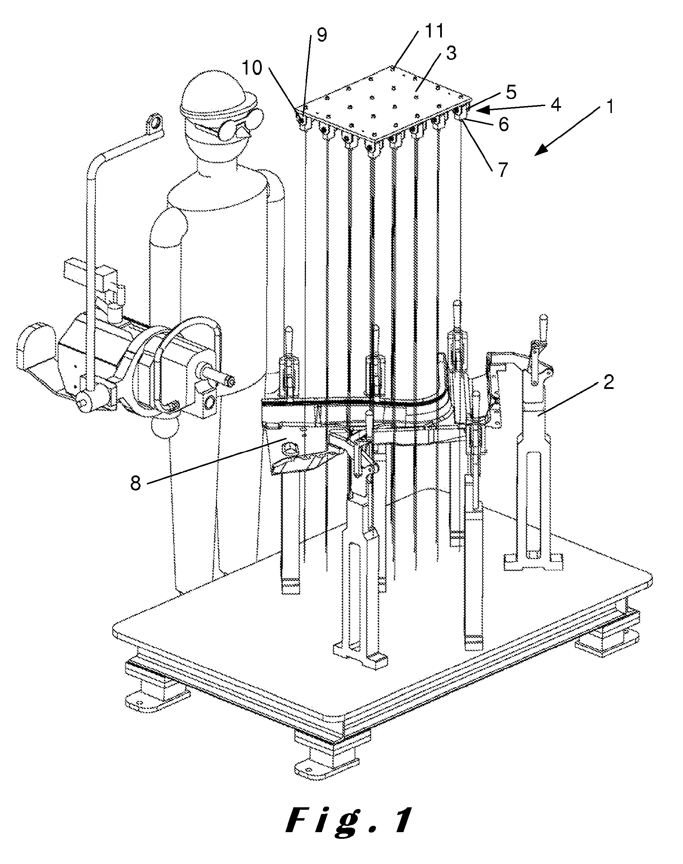

Figure 1 shows a preferred embodiment of the device 1 according to the current invention. The device 1 shown in figure 1 comprises a support 3 and a mounting arrangement for positioning a workpiece 8.

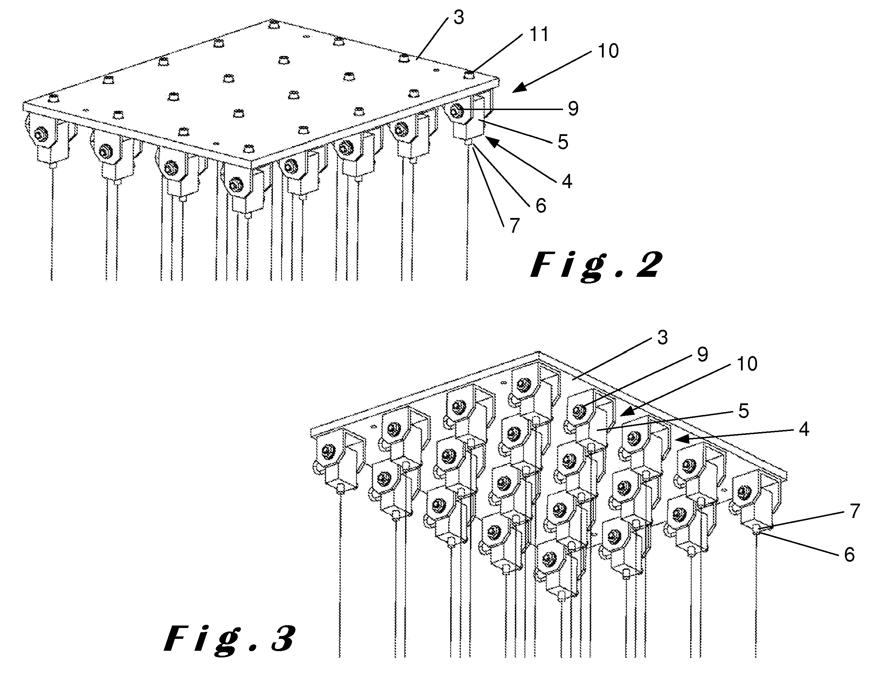

A preferred embodiment of the support 3 is shown in detail in figures 2 and 3 and comprises indicating means 4 for indicating one or more welding locations onto the workpiece 8.

The indicating means 4 for indicating one or more welding locations comprise a number of mark projecting units 5. The mark projecting units 5 are individually adjustably mounted on the support 3 and each comprises a light source 6. The light sources 6 are provided to project a mark onto the workpiece 8 indicating where a weld is to be applied. The workpiece 8 is mounted in a predetermined position with respect to the mark projecting units 5.

The support 3 is shown in detail in figures 2 and 3. The support 3 can be made of any suitable material known to the person skilled in the art such as metal, wood, plastic, etc. Although the support 3 shown in figure 2 is rectangular, the shape of the support 3 is not critical for the invention and can for example also be square, round, etc. Although the support 3 shown in figure 2 has a plane shape, the support 3 can be curved, undulating, spherical, etc. The shape and dimensions of the support 3 can be determined by the person skilled in the art and depend for example on the number of mark projecting 5 mounted on the support 3, the configuration of the mark projecting units 5 on the support 3, the shape of the workpiece 8, the location of the welds which need to be applied to the workpiece 8, etc.

The support 3 shown in figure 2 and 3 comprises twenty mark projecting units 5. The number of mark projecting units 5 can however be determined by the skilled person. Preferably, every weld which needs to be applied on the workpiece 8 is indicated by at least one mark projecting unit 5. Since different workpieces 8 can have a different number of welds which need to be applied, the number of mark projecting units 5 is preferably large enough so that indication of the welds which need to be applied can be provided for a large number of workpieces 8 having a wide range of number of welds which need to be applied.

The mark projecting units 5 shown in figures 2 and 3 are mounted to the support 3 in a rectangular configuration in which mark projecting units 5 are mounted to the support 3 at regular intervals. This is however not critical for the invention and the mark projecting units 5 can be mounted to the support in any suitable configuration. The configuration of the mark projecting units 5 depends on for example the shape and form of the workpiece 8, the number and location of the welds which need to be applied to the workpiece 8, etc. and can be determined by the person skilled in the art. A rectangular configuration of the mark projecting units 5 as shown in figures 2 and 3 however is versatile and has the advantage that a wide range of workpieces 8 having different welds which need to be applied to the workpiece 8 can be provided with indications of those welds.

The mark projecting units 5 shown in figure 2 are mounted to the support 3 by bolts. Any other means for attaching the mark projecting units 5 known to the person skilled in the art can however be used, such as for example glue, nails, rivets, welding, soldering, etc. However, the mark projecting units 5 preferably are removably mounted to the support 3 so that the number of the mark projecting units 5 can be changed according to the specific demands for example imposed by the workpiece 8 and//or the number of welds to be applied onto the workpiece 8.

Figure 2 shows that to mount the mark projecting units 5 to the support 3, several holes are provided in the support 3 through which part of the mark projecting units 5 is received and subsequently bolted. The use of holes for mounting the mark projecting units 5 to the support 3 is however not critical for the invention and any other method for mounting the mark projecting units 5 to the support 3 can be used, such as for example click-on systems.

The mark projecting units 5 preferably comprise means 11 for changing the position of the mark projecting units 5 on the support 3. These means 11 can be provided by the means allowing the mark projecting units 5 to be removably mounted to the support 3 such as for example the combination of the bolts and holes shown in figure 2. This combination also makes the mark projecting units 5 rotatable with respect to the support 3 around a rotational axis, i.e. an axis perpendicular to the plane of the support 3. The mark projecting means 5 can however also be mounted to the support 3 by means which allow to change the position of the mark projecting units 5 on the support without having to remove the mark projecting units 5 such as for example grooves allowing to slide the mark projecting units 5 into their location or any other means known to the person skilled in the art allowing such positioning of the mark projecting units 5.

The mark projecting units 5 preferably comprise means for changing the orientation of the projection direction along which the mark indicating where the weld is to be applied 8 is projected on the workpiece 8. The mark projecting units 5 shown in figure 2 and 3 for example comprise hinging means 10 to individually adjustably mount the mark projecting units 5 to the support 3. The hinging means 10 shown in figure 2 and 3 comprise a hinge 9. Since the hinge 9 only allows tilting the mark projecting units 5 in a single plane, the mark projecting unit 5 preferably is rotationably mounted to the support 3, as is the case shown in figure 2 and 3. The hinges 9 shown in figure 3 are however not critical for the invention and a ball joint can be added or can even replace the hinges 9. Since a ball joint allows mutual rotation and hinging of the mark projecting unit 5, the mark projecting unit 5 can be more easily oriented to indicate the weld which needs to be applied on the workpiece 8. The use of hinges 9 and/or ball joints is however not critical for the invention and other types of means 10 allowing an adjustable mount of the mark projecting unit 5 known to the person skilled in the art can be used.

The mark projecting units 5 can be manually oriented towards the workpiece 8 and/or positioned onto the support 3, for example by adjusting the orientation of the different mark projecting units 5 using the hinging means 10 such as the hinges 9 and/or the ball joint. The orientation and/or position of the mark projection units 5 can however also be electronically controlled, in which case drive means are provided for adjusting the position and/or orientation of the mark projecting units 5. These drive means can for example be electromotors, hydraulic or pneumatic systems or other means known to the person skilled in the art.

Calibration of the mark projecting units 5 by adapting the orientation and/or position of the mark projecting units 5 can for example be performed by mounting a workpiece 8 in the mounting arrangement after which the orientation and/or position of the mark projecting units 5 can be adapted so that the locations on which a weld needs to be applied are indicated by a mark originating from the mark projecting units 5. The position and/or orientation of the mark projecting units 5 can be manually or electronically adjusted as described above. After calibration of the orientation and/or position of the different mark projecting units 5, subsequent workpieces 8 placed on the mounting arrangement are easily provided with marks indicating where a weld is to be applied by switching on the mark projecting units 5.

The workpiece 8 which is used for calibration preferably is a workpiece 8 in which the different welds to be applied are pre-indicated for example by writing, gluing, welding, etc. marks onto the workpiece 8. For example, a workpiece 8 having welds applied at the correct locations can be mounted into the mounting arrangement after which the mark projecting units 5 are calibrated so that they indicate the welds applied at the correct locations. When a workpiece 8 to be welded is mounted into the mounting arrangement 2 after calibration, the mark projecting units 5 indicate where a weld is to be applied.

Preferably, the device 1 comprises a first set 12 of mark projecting units 5 provided for projecting at least one first mark onto a first workpiece 8 and at least a second set 13 of mark projecting units 5 provided for projecting at least one second mark onto a second workpiece 8. Switching means (not shown) for selecting the first 12 or the second set 13 are provided. After calibration of the first set 12 and second set 13 of mark projecting units 5 with respect to a first workpiece 8 and a second workpiece 8 respectively, first and second workpieces 8 can be welded without having to recalibrate the mark projecting units 5. When a first workpiece 8 is for example mounted into the mounting arrangement 2, the switching means are switched so that the first set 12 is selected. The mark projecting units 5 of the first set 12 then project their mark onto the first workpiece 8, indicating the welds to be applied. When a second workpiece 8 is afterwards mounted into the mounting arrangement 2, the switching means are switched so that the second set 13 is selected. The mark projecting units 5 of the second set 14 then project their mark onto the second workpiece 8, indicating the welds to be applied. The first and the second workpieces 8 can in other words be mixed without recalibration of the mark projecting units 5. When more than two workpieces 8 need to be mixed, preferably an according number of sets of mark projecting units 5 is provided to avoid recalibration of the mark projecting units 5.

The switching means are not shown in the figures and any switching means known to the person skilled in the art can be used in the device according to the invention.

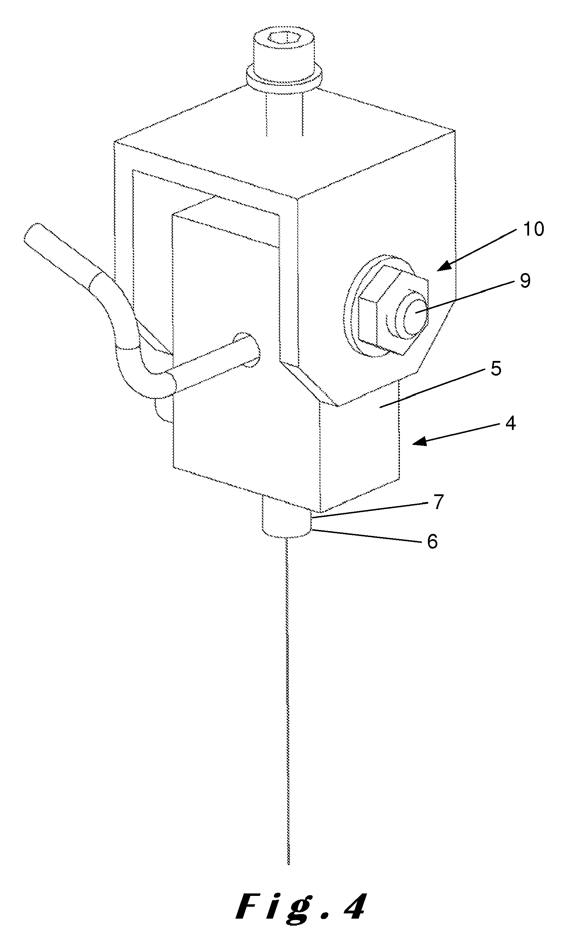

A detail of a mark projecting unit 5 is shown in figure 4. The mark projecting unit 5 can comprise any light source 6 known to the person skilled in the art, such as a lamp, LED, etc. but preferably comprises a laser 7. Light sources 6 comprising a laser 7 have the advantage that a mark having an intensity, which is relatively large compared to light intensities normally applied in a workplace, can be clearly visibly projected onto the workpiece 8.

The mark projected by the mark projecting units 5 used to indicate where a weld needs to be applied is not critical for the invention. The mark can for example be round, square, triangular, arrow-shaped, etc. and can be applied to any location deemed appropriate to indicate where the weld needs to be applied. The dimension of the mark is also not critical for the invention and can be determined by the person skilled in the art. In a first example, the mark is dot-shaped and is applied where the weld is to be applied. In a second example, the mark is arrow-shaped and is applied next to where the weld needs to be applied, the arrow indicating where the weld needs to be applied. In a third example, the mark is a circle and is applied around where the weld is to be applied.

In a further embodiment, the dimensions of the mark indicate the shape and form of the weld which is to be applied. The mark can for example be linear and have a certain length to indicate a linear weld having a length indicated by the mark. Other shapes and forms of the weld may be indicated by corresponding shapes and forms of the marks.

The embodiment of the mounting arrangement for mounting the workpiece 8 with respect to the mark projecting units 5 is not critical for the invention and any mounting arrangement known to the person skilled in the art can be used.

## Claims

1. A device (1) for assisting in manual welding, comprising - a support (3),
- indicating means (4) for indicating one or more welding locations onto a workpiece (8) and
- a mounting arrangement (2) for mounting the workpiece (8) in a predetermined position with respect to the indicating means (4),
**characterised in that** the indicating means (4) are formed by a plurality of mark projecting units (5), individually adjustably mounted on the support (3), each comprising a light source (6) for projecting a mark onto the workpiece (8) indicating where a weld is to be applied.

2. A device (1) according to claim 1, **characterised in that** at least one light source (6) comprises a laser (7).

3. A device (1) according to claim 1 or 2, **characterised in that** at least one mark projecting unit (5) comprises hinging means (10) to individually adjustably mount the mark projecting unit (5) to the support (3).

4. A device (1) according to claim 3, **characterised in that** the hinging means (10) comprise a ball joint.

5. A device (1) according to claim 3 or 4, **characterised in that** the hinging means (10) comprise at least one hinge (9).

6. A device (1) according to any one of the preceding claims, **characterised in that** the mark projecting units (5) comprise means (11) for changing the position of the mark projecting units (5) on the support (3).

7. A device (1) according to any one of the preceding claims, **characterised in that** the device (1) comprises a first set (12) of mark projecting units (5) provided for projecting at least one first mark onto a first workpiece (8) and at least a second set (13) of mark projecting units (5) provided for projecting at least one second mark onto a second workpiece (8) and switching means for selecting the first (12) or the second set (13).
